# FASCICULE DE BREVET EUROPEEN

(11) **EP 2 555 938 B1**
(45) Date de publication et mention de la délivrance du brevet: **30.05.2018**
(21) Numéro de dépôt: 11717311.2
(22) Date de dépôt: 07.04.2011
(51) Int. Cl.: B60K 17/34, B60K 23/08, B60T 8/1769, B60W 10/02, B60W 10/18, B60W 30/02

(54) **PROCEDE DE COMMANDE DU FONCTIONNEMENT D'UN MOYEN DE COUPLAGE MECANIQUE DES PREMIER ET DEUXIEME ESSIEUX D'UN VEHICULE AUTOMOBILE, PROCEDE DE FONCTIONNEMENT D'UN SYSTEME DE TRANSMISSION RESPECTIF, SYSTEMES CORRESPONDANTS, PROGRAMME REALISANT LES ETAPES DES PROCEDES, SUPPORT D'ENREGISTREMENT DE DONNEES AVEC UN TEL PROGRAMME ET VEHICULE AUTOMOBILE AVEC UN SYSTEME RESPECTIF**
VERFAHREN ZUM STEUERN EINER KUPPLUNG ZWISCHEN FAHRZEUGACHSEN, STEUERVERFAHREN FÜR EIN ENTSPRECHENDES ÜBERTRAGUNGSSYSTEM, ENTSPRECHENDE ÜBERTRAGUNGSSYSTEME, EIN ENTSPRECHENDES PROGRAMM UND SPEICHERMITTEL DAFÜR, SOWIE EIN FAHRZEUG MIT EINEM DERARTIGEN SYSTEM
METHOD FOR CONTROLLING A MECHANIC COUPLING DEVICE BETWEEN VEHICLE AXLES, CONTROL METHOD FOR A RESPECTIVE TRANSMISSION SYSTEM, RESPECTIVE TRANSMISSION SYSTEMS, PROGRAM REALISING THE METHOD STEPS, STORING DEVICE WITH SUCH A PROGRAM AND AUTOMOBILE WITH A CORRESPONDING SYSTEM

(30) Priorité: 08.04.2010 FR 1052645
(43) Date de publication de la demande: 13.02.2013
(73) Titulaire: Renault S.A.S., 92100 Boulogne-Billancourt (FR); Guegan, Stéphane, 78000 Versailles (FR)
(72) Inventeur: ROMANI, Nicolas, F-75016 Paris (FR); MONTI, Alessandro, F-92250 La Garenne Colombes (FR); POTHIN, Richard, F-78760 Jouars Pontchartrain (FR); SAINT LOUP, Philippe, F-78760 Jouars Pontchartrain (FR)
(86) Numéro de dépôt international: PCT/FR2011/050789
(87) Numéro de publication internationale: WO 2011/124856

(56) Documents cités:
- EP-A1- 0 336 055
- WO-A1-2010/112684
- JP-A- 11 278 088
- JP-A- 61 166 727
- JP-U- H06 -72 728
- US-A1- 2005 285 442
- US-A1- 2007 132 563

## Description

La présente invention concerne un procédé de fonctionnement d'un système de transmission du type à quatre roues motrices d'un véhicule automobile et un procédé de commande d'un moyen de couplage mécanique d'un premier essieu à un deuxième essieu d'un système de transmission du type quatre roues motrices d'un véhicule automobile. L'invention porte également sur un système de commande de l'état du moyen de couplage mécanique. Elle porte aussi sur un système de transmission comportant un tel système de commande. Elle porte encore sur un véhicule comprenant un tel système de commande ou un tel système de transmission.

L'invention s'applique à un véhicule équipé d'un système quatre roues motrices pilotées. L'objectif de ce type de véhicule est d'améliorer les prestations telles que le comportement et la motricité, notamment en décollage, c'est-à-dire lors de la mise en mouvement du véhicule et en franchissement.

L'invention porte sur une stratégie ou procédé de commande d'un système quatre roues motrices pilotées qui permet de gérer les actions de freinage du conducteur dans le but d'améliorer les performances d'un véhicule à quatre roues motrices en phases de freinage et de décollage.

On connaît un système de transmission du type quatre roues motrices dans lequel un moyen de couplage mécanique à commande électromagnétique d'un essieu avant à un essieu arrière (coupleur) peut fonctionner selon trois états définissant trois modes de fonctionnement du système de transmission.
- un premier mode de transmission où une partie (variable) seulement de la capacité maximale de couple issue d'une source de couple (le moteur du véhicule automobile) et destinée au train arrière est effectivement transmise au train arrière ; ce premier mode dénommé mode « 4*4 Automatique » correspondant à un coupleur dit « piloté », c'est-à-dire qu'un système de commande du coupleur gère automatiquement son fonctionnement, en particulier la quantité de couple transmise ou transmissible,
- un deuxième mode de transmission où la totalité de la capacité maximale de couple issu de la source de couple et destinée au train arrière est effectivement transmise au train arrière ; ce deuxième mode dénommé mode « 4*4 Tout Terrain » correspondant à un coupleur dit « fermé », c'est-à-dire qu'il est verrouillé dans un état définissant une valeur fixe de couple maximal transmissible, le verrouillage étant de préférence électrique,
- un troisième mode de transmission où aucun couple (ou un couple négligeable) issu de la source de couple n'est transmis au train arrière ; ce troisième mode dénommé mode « 4*2 » correspondant à un coupleur dit « ouvert », c'est-à-dire que le coupleur est désactivé ou qu'il ne transmet qu'une quantité négligeable de couple.

On connaît du document JP62029421 un système de transmission de véhicule quatre roues motrices permettant d'améliorer à la fois les performances d'accélération au démarrage et d'éviter le blocage simultané des quatre roues lors de freinages, un moyen de contrôle est utilisé afin de gérer l'ouverture et la fermeture du système de couplage (entre les essieux avant et arrière) : quand la vitesse augmente et dépasse un certain seuil, le système est découplé et reste découplé même si la vitesse repasse sous le seuil considéré, ceci pour éviter de freiner sur les quatre roues après un démarrage sur route (à forte adhérence). Ce système permet de forcer le découplage du système quatre roues motrices au-delà d'une certaine vitesse afin d'éviter le blocage simultané des quatre roues si le conducteur freine après avoir réalisé un décollage en mode quatre roues motrices.

On connaît du document EP1627763 un procédé de fonctionnement d'un véhicule quatre roues motrices qui tient compte du freinage suivant les étapes suivantes :
on détecte un freinage et on ferme un coupleur ; on détecte un freinage et un appui sur une pédale d'accélérateur et on ferme le coupleur tant que l'appui sur la pédale d'accélérateur ne dépasse pas un certain seuil ; si l'appui sur la pédale d'accélérateur dépasse le seuil, on ouvre le coupleur et on maintient l'accélération.

On connaît du document EP1179464 un système de freinage évolué qui contrôle individuellement les forces de freinage à appliquer aux roues en fonction de l'état du véhicule : ce système de contrôle est inactif en mode « quatre roues motrices permanent » ou en mode « quatre roues motrices piloté » avec un fort niveau de couplage ; s'il est déjà actif, le système de contrôle de freinage le reste même si une commande de sélection du mode « quatre roues motrices permanent » ou « quatre roues motrices piloté » à fort couplage est envoyée au coupleur. Ce système permet d'améliorer la stabilité mais n'améliore pas la motricité en conditions « tout-terrain ».

Le brevet US5247443 décrit un procédé de répartition de couple entre les trains avant et arrière d'un véhicule en fonction de la différence entre les vitesses de rotation des trains avant et arrière, et qui modifie le seuil de détection sur le glissement si le frein de parking est activé. Ce procédé permet d'améliorer les performances du véhicule en optimisant le glissement mais il ne tient compte que du frein de parking. Les documents JP 11 278088 A, JP 61 166727 A et JP H06-72 728 U divulguent un procédé selon le préambule de la revendication 1. Le but de l'invention est de fournir un procédé de commande d'un moyen de couplage mécanique d'essieux permettant de remédier aux problèmes évoqués précédemment et améliorant les procédés de commande connus de l'art antérieur. En particulier, l'invention propose un procédé de commande de moyen de couplage permettant d'améliorer les performances de décollage (mise en mouvement) d'un véhicule automobile du type à quatre roues motrices tout en améliorant les performances de freinage et de stabilité dynamique d'un tel véhicule automobile.

Le procédé de commande selon l'invention régit le fonctionnement d'un moyen de couplage mécanique des premier et deuxième essieux d'un système de transmission d'un véhicule automobile, le premier essieu étant entraîné par défaut et le deuxième essieu étant entraîné optionnellement selon l'état du moyen de couplage, le système de transmission étant susceptible de fonctionner selon un premier mode dans lequel le couple transmissible par le moyen de couplage mécanique est fixe ou selon un deuxième mode dans lequel le couple transmissible par le moyen de couplage mécanique est variable, procédé selon lequel, dans les premier et deuxième modes, une action de freinage due à un dispositif de frein de parking provoquant une désactivation du moyen de couplage si la vitesse du véhicule est supérieure à une première vitesse seuil et tant que la vitesse du véhicule est supérieure à une deuxième vitesse seuil,, et dans le premier mode, une action de freinage due à un autre dispositif de freinage peut provoquer une désactivation du moyen de couplage lorsque la vitesse du véhicule est supérieure à une troisième vitesse seuil.

Dans le deuxième mode, une action de freinage due à un autre dispositif de freinage peut provoquer une désactivation du moyen de couplage indépendamment de la vitesse du véhicule.

L'invention porte aussi sur un support d'enregistrement de données lisible par un calculateur sur lequel est enregistré un programme informatique comprenant des moyens de codes de programme informatique de mise en oeuvre des étapes du procédé selon l'une des revendications précédentes.

Selon l'invention, le système commande l'état d'un moyen de couplage mécanique des premier et deuxième essieux d'un système de transmission d'un véhicule automobile, le premier essieu étant entraîné par défaut et le deuxième essieu étant entraîné optionnellement selon l'état du moyen de couplage. Le système comprend des moyens matériels et/ou logiciels de mise en oeuvre du procédé défini précédemment.

Les moyens matériels peuvent comprendre un moyen de détermination de l'état d'actionnement d'un dispositif de frein de parking et/ou un moyen de détermination de l'état d'actionnement d'un autre dispositif de freinage et un moyen de détermination de la vitesse du véhicule automobile et un moyen de détermination du mode de fonctionnement du système de transmission.

Les moyens matériels peuvent comprendre des comparateurs pour comparer la vitesse du véhicule automobile à des vitesses seuil.

Selon l'invention, le système de transmission d'un véhicule automobile comprend un premier essieu entraîné par défaut et un deuxième essieu entraîné optionnellement selon l'état d'un moyen de couplage mécanique des premier et deuxième essieux et un système de commande du moyen de couplage mécanique défini précédemment.

Selon l'invention, le véhicule automobile comprend un système de commande défini précédemment ou un système de transmission défini précédemment.

L'invention porte aussi sur un programme informatique comprenant un moyen de code de programme informatique adapté à la réalisation des étapes du procédé défini précédemment, lorsque le programme tourne sur un ordinateur.

Le dessin annexé représente, à titre d'exemple, un mode d'exécution d'un procédé de commande selon l'invention et un mode de réalisation d'un système de commande selon l'invention.
La figure 1 est un mode de réalisation d'un véhicule automobile comprenant un système de transmission à quatre roues motrices selon l'invention.
La figure 2 est un schéma d'une architecture logicielle régissant le fonctionnement d'un système de commande et d'un système de transmission selon l'invention et permettant de mettre en oeuvre les procédés selon l'invention.
La figure 3 est un schéma détaillé d'une première procédure de commande d'un coupleur permettant ou non de transmettre un couple à un essieu additionnel du véhicule.
La figure 4 est un graphique temporel traduisant les conséquences de la mise en oeuvre de la procédure de la figure 3.
La figure 5 est un graphique temporel traduisant les conséquences de la mise en oeuvre de la procédure de la figure 5.
La figure 6 est un mode de réalisation d'un calculateur permettant de régir le fonctionnement d'un système selon l'invention et de mettre en oeuvre le procédé de fonctionnement selon l'invention.
La figure 7 est un mode de réalisation d'un premier module du calculateur.
La figure 8 est un mode de réalisation d'un deuxième module du calculateur.

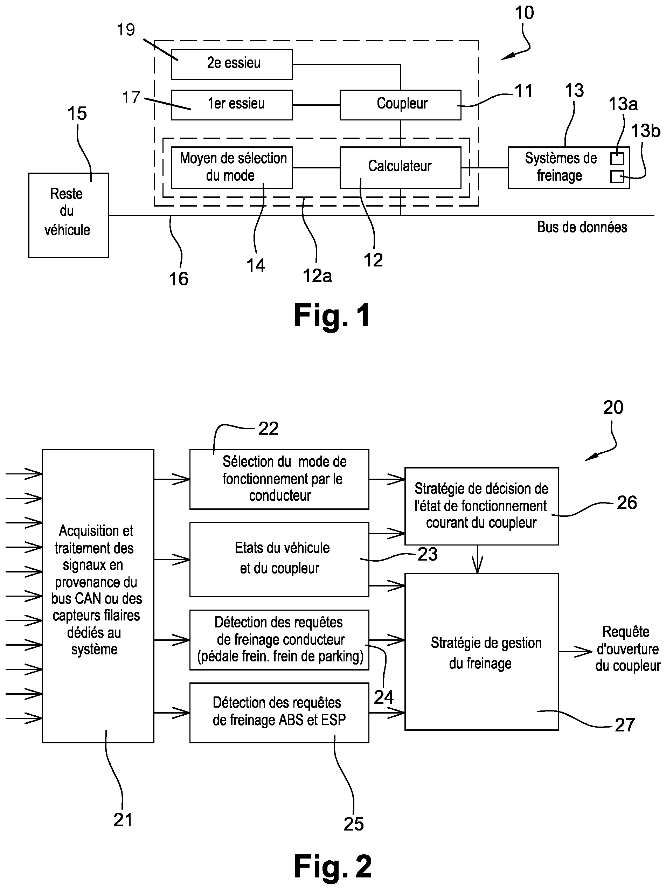

Un mode de réalisation de véhicule automobile 10 selon l'invention représenté à la figure 1 comprend un mode de réalisation d'un système de transmission 18 du type à quatre roues motrices, et en particulier du type à quatre roues motrices pilotées et un système de freinage 13. Ce système de transmission et ce système de freinage sont reliés au reste 15 du véhicule via un bus 16.

Le système de freinage comprend un dispositif de frein de parking 13a et un autre dispositif de freinage 13b commandés soit par l'action du conducteur sur un organe de commande de freinage comme une pédale de freinage, soit par l'action d'un système de contrôle de trajectoire et/ou de stabilité du véhicule et/ou d'antipatinage, comme un système ABS ou un système ESP.

Le système de transmission 18 comprend principalement un premier essieu 17 de roues du véhicule automobile, par exemple un essieu avant, un deuxième essieu 19 de roues du véhicule automobile, par exemple un essieu arrière, un moyen 11 mécanique de couplage, par exemple à commande électromagnétique, des premier et deuxième essieux (coupleur) et un système de commande 12a de l'état du moyen mécanique de couplage. Le système de commande comprend un moyen 14 de sélection du mode de fonctionnement du système de transmission et un calculateur 12.

Le système de transmission est connecté à une source de couple d'entraînement du véhicule automobile (un moteur d'entraînement du véhicule).

Bien que non représentés, le système de transmission comprend des moyens de détermination de variables d'état du véhicule, tels que par exemple des moyens d'obtenir la vitesse de rotation de chaque roue, des moyens d'obtenir les informations relatives au freinage (détecteur d'action sur une pédale de frein, détecteur d'action sur un organe de commande de frein de parking, détecteurs d'activation d'un système de contrôle de la stabilité et/ou de la motricité et/ou de l'adhérence du véhicule), et des moyens électroniques ou automatiques de calcul. Le système de transmission comporte un moyen de sélection par l'utilisateur (par exemple au tableau de bord) d'un mode de fonctionnement du système, notamment un premier mode « 4*4 Automatique », un deuxième mode « 4*4 Tout Terrain » ou un troisième mode « 4*2 », un moyen de détection, à partir des variables d'état du véhicule et/ou du système, de la volonté du conducteur et des conditions de roulage (accélération, freinage, glissement...) et un moyen de commande pour commuter le système dans un mode déterminé en fonction du mode sélectionné par le conducteur, de la volonté conducteur et des conditions de roulage du véhicule. Le système de transmission, en particulier le système de commande du moyen mécanique de couplage comprend également tous les moyens matériels et/ou logiciels permettant de mettre en oeuvre les procédés objets de l'invention. Notamment, les systèmes, en particulier le calculateur, peuvent comprendre un programme informatique comprenant un moyen de code de programme informatique adapté à la réalisation des étapes des procédés objets de l'invention.

Dans le système de transmission, le premier essieu (par exemple l'essieu avant, respectivement l'essieu arrière) est entraîné par défaut par la source de couple. Par contre, le deuxième essieu (par exemple l'essieu arrière, respectivement l'essieu avant) n'est entraîné qu'optionnellement selon l'état du coupleur.

À ce propos, selon l'état du coupleur, le système de transmission présente les trois modes de fonctionnement suivants:
- un premier mode de transmission où une partie (variable) seulement de la capacité maximale de couple issu de la source de couple et destinée au deuxième essieu est effectivement transmise au deuxième essieu ; ce premier mode dénommé mode « 4*4 Automatique » correspondant à un coupleur dit « piloté », c'est-à-dire que le système de commande du coupleur gère automatiquement son fonctionnement, en particulier la quantité de couple transmise ou transmissible,
- un deuxième mode de transmission où la totalité de la capacité maximale de couple issu de la source de couple et destinée au deuxième essieu est effectivement transmise au deuxième essieu ; ce deuxième mode dénommé mode « 4*4 Tout Terrain » correspondant à un coupleur dit « fermé », c'est-à-dire qu'il est verrouillé dans un état définissant une valeur fixe de couple maximal transmissible,
- un troisième mode de transmission où aucun couple ou seulement un couple négligeable issu de la source de couple est transmis au deuxième essieu ; ce troisième mode dénommé mode « 4*2 » correspondant à un coupleur dit « ouvert », c'est-à-dire que le coupleur est désactivé ou qu'il ne transmet qu'une quantité négligeable de couple.

Sur le plan technologique, le coupleur peut être du type à friction, c'est-à-dire qu'il comporte des disques de friction destinés à venir en contact les uns avec les autres pour transmettre le couple et un moyen actionneur pour écarter ou amener ces disques en contact les uns avec les autres. Le coupleur peut aussi être du type à fluide visqueux (viscocoupleur), c'est-à-dire qu'il comporte des roues à aubes baignant dans un fluide et un moyen actionneur pour écarter ou rapprocher ces roues. Dans l'un comme dans l'autre des cas, le moyen actionneur est piloté par le calculateur 12.

La problématique technique concerne le maintien de la motricité d'un véhicule équipé d'un système de transmission du type à quatre roues motrices pilotées dans un double objectif de performance et de sécurité.

Pour ce faire, en phase de décollage du véhicule en mode « 4*4 Tout Terrain » (conditions de franchissement), on souhaite maintenir le coupleur fermé (en dessous d'un certain seuil de vitesse) même en cas d'actionnement du dispositif de freinage 13b afin d'assurer le transfert optimal du couple disponible au sol.

De la même manière, en phase de freinage en descente, on souhaite maintenir le coupleur fermé (en dessous d'un certain seuil de vitesse) même en cas d'actionnement du dispositif de freinage 13b afin de répartir l'effort de freinage sur les quatre roues.

Le seuil de vitesse (paramétrable) permet de limiter l'intervention de cette fonction aux basses vitesses associées à un décollage (mise en mouvement du véhicule), à un franchissement ou à une descente en forte pente, et d'assurer par ailleurs la stabilité du véhicule à vitesse moyenne ou élevée.

Dans le premier mode « 4*4 Automatique » (conditions de roulage sur chemin, terrain vague, hors route bitumée), on souhaite ouvrir ou désactiver le coupleur dès que le dispositif de freinage 13b est activé, de sorte qu'il n'y ait plus de couple transmis au deuxième essieu.

En ce qui concerne le dispositif frein de parking 13a, on souhaite appliquer une stratégie dans le même esprit de celle présentée pour le dispositif de freinage 13b, mais avec deux seuils de vitesse et une hystérésis sur la vitesse, pour les deuxième « 4*4 Automatique » et troisième « 4*4 Tout Terrain » modes.

Ainsi, les procédés et systèmes selon l'invention permettent de gérer les actions de freinage du conducteur (via la pédale de frein et le levier du frein de parking) dans le but d'améliorer les performances et la sécurité d'un véhicule équipé d'un système à quatre roues motrices pilotées en phases de freinage et de décollage. La solution consiste à choisir si le coupleur piloté doit être ouvert ou non sur une requête de freinage, en fonction du mode de fonctionnement demandé par le conducteur et des conditions de roulage.

L'invention permet d'intégrer la gestion du freinage à la stratégie de commande du véhicule afin d'optimiser la motricité en phase de décollage et la transmission des efforts de freinage sur les quatre roues en phase de descente.

L'invention permet d'inhiber la fonction d'ouverture du coupleur sur une requête de freinage à faible vitesse (en conditions de franchissement).

L'invention permet de tenir compte du mode de fonctionnement demandé par le conducteur et de l'état du coupleur.

L'invention permet de différencier l'appui sur la pédale de frein de l'activation du frein de parking afin de s'adapter aux conditions de roulage (démarrage en côte, freinage en descente...).

L'invention permet de prendre en compte des requêtes de freinage envoyées par des systèmes pilotés tels que des systèmes de contrôle d'antipatinage et/ou de stabilité du véhicule et/ou d'antiblocage.

L'invention permet de gérer les actions de freinage du conducteur (via la pédale de frein et/ou le frein de parking) dans le but d'améliorer les performances d'un véhicule à « quatre roues motrices » en phases de freinage et de décollage.

Un exemple d'architecture logicielle 20 permettant de mettre en oeuvre l'invention est représentée à la figure 2. Elle comprend un premier module 21 d'acquisition et de traitement de signaux en provenance de différents organes et capteurs du véhicule, un module 22 de sélection du mode de fonctionnement du coupleur, un module 23 de détermination des états du véhicule et du coupleur, un module 24 de détection de requêtes de freinage provoquées par l'action sur une pédale de frein ou sur un levier de frein à main, un module 25 de détection de requêtes de freinage provoqué par un système de contrôle d'antipatinage et/ou de stabilité et/ou d'antiblocage, un module 26 de décision concernant l'état courant du coupleur et un module 27 de gestion du freinage.

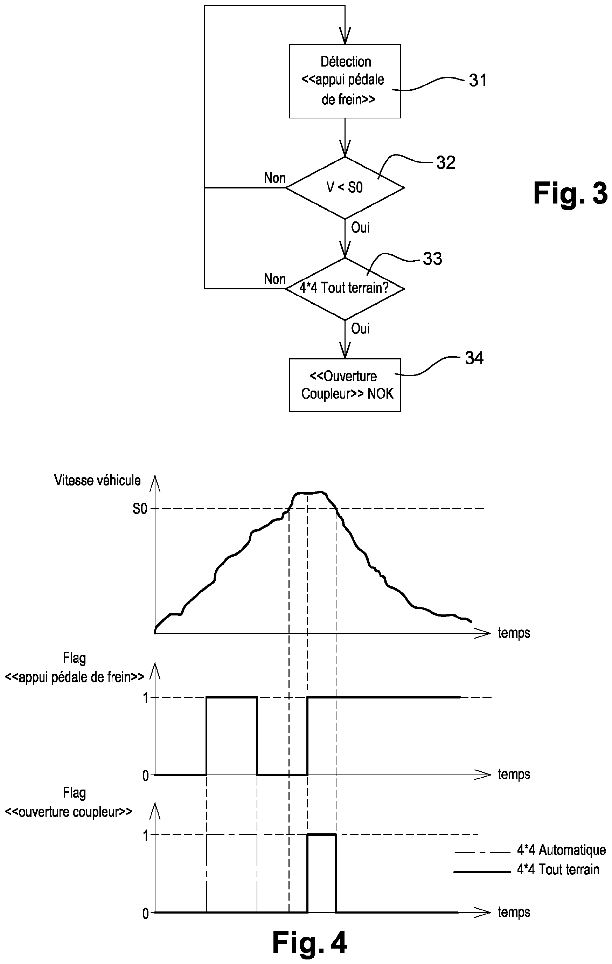

Un mode de réalisation de procédure de fonctionnement du système de commande de coupleur est décrit ci-après en référence à la figure 3. Cette procédure s'applique au cas où l'utilisateur actionne une pédale de frein ou, plus généralement au cas où le dispositif de freinage 13b est activé.

Dans une première étape 31, on détecte si le dispositif de freinage 13b est activé. Si tel n'est pas le cas, on boucle sur cette étape et, si tel est le cas, on passe à une étape 32.

À l'étape 32, on teste si la vitesse du véhicule est supérieure à une vitesse seuil S0. La valeur de vitesse seuil S0 est par exemple comprise entre à 0 km/h et 50 km/h ; elle est de préférence approximativement égale à 20 km/h. Si la vitesse du véhicule est inférieure à la vitesse seuil S0, alors on boucle sur l'étape 31. Si la vitesse du véhicule est supérieure à la vitesse seuil S0, alors on passe à une étape 33.

Dans l'étape 33, on teste si le système de transmission fonctionne en mode « 4*4 Tout Terrain ». Si tel n'est pas le cas, on boucle sur l'étape 31 et, si tel est le cas, on passe à une étape 34 dans laquelle on interdit l'ouverture ou la désactivation du coupleur.

Les conséquences de la mise en oeuvre de cette procédure sont décrites ci-dessous en référence à la figure 4.

Le premier chronogramme représente la vitesse d'un véhicule automobile mettant en oeuvre l'invention en fonction du temps. Cette vitesse croît dans une première phase, puis décroît dans une deuxième phase. Pendant une partie du temps, la vitesse du véhicule est supérieure à la vitesse seuil S0.

Le deuxième chronogramme représente un signal logique d'activation d'une pédale de frein, ou plus généralement, d'activation du dispositif de freinage 13b.

Le troisième chronogramme représente deux signaux logiques d'ouverture du coupleur ; le premier signal, représenté en trait continu, représente le signal logique d'ouverture alors que le système de transmission fonctionne dans le mode « 4*4 Automatique » et le deuxième signal, représenté en traits mixtes, représente le signal logique d'ouverture alors que le système de transmission fonctionne dans le mode « 4*4 Tout Terrain ».

En phase de décollage du véhicule en mode « 4*4 Tout Terrain » (conditions de franchissement), le coupleur est maintenu fermé (en dessous du seuil de vitesse S0) même en cas d'appui sur la pédale de frein, ou plus généralement d'activation du dispositif de freinage 13b, afin d'assurer le transfert optimal du couple disponible au sol.

En phase de freinage (notamment en descente), le coupleur est maintenu fermé (en dessous du seuil de vitesse S0) même en cas d'appui sur la pédale de frein, ou plus généralement d'activation du dispositif de freinage 13b, afin de répartir l'effort de freinage sur les quatre roues.

Cette stratégie n'est pas appliquée en mode « 4*4 Automatique » : dans ce mode, le coupleur est ouvert à chaque requête de freinage due à un appui pédale de frein ou, plus généralement, en cas d'activation du dispositif de freinage 13b.

Un mode de réalisation de procédure de fonctionnement du système de commande de coupleur s'applique au cas où un dispositif de frein de parking 13a est activé, alors que le système de transmission fonctionne selon le mode « 4*4 Automatique » ou selon le mode « 4*4 Tout Terrain ».

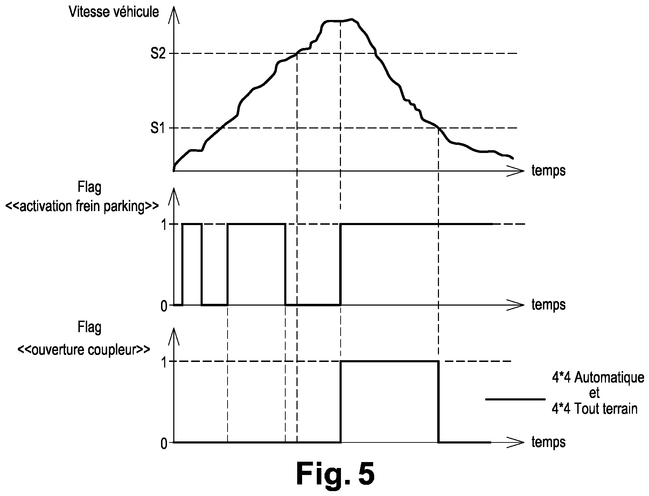

Les conséquences de la mise en oeuvre de cette procédure sont décrites ci-dessous en référence à la figure 5.

Le premier chronogramme représente la vitesse d'un véhicule automobile mettant en oeuvre l'invention, en fonction du temps. Cette vitesse croît dans une première phase, puis décroît dans une deuxième phase. Pendant une première partie du temps, la vitesse du véhicule est supérieure à la vitesse seuil S1 et, pendant une deuxième partie du temps, la vitesse du véhicule est supérieure à la vitesse seuil S2.

Le deuxième chronogramme représente un signal d'activation du dispositif de frein de parking 13a.

Le troisième chronogramme représente un signal logique d'ouverture du coupleur. On remarque qu'il faut qu'une condition de vitesse et une condition d'activation du dispositif de frein de parking soient remplies pour que le coupleur soit ouvert et qu'il suffit d'une condition de vitesse pour que le coupleur soit de nouveau fermé.

Les deux seuils de vitesse S1 et S2 permettent de générer une hystérésis : lorsque la vitesse du véhicule augmente à partir d'une vitesse inférieure à S1 et que le frein de parking est activé, alors le coupleur ne doit s'ouvrir que si la vitesse dépasse le seuil S2 et rester ouvert aussi longtemps que la vitesse véhicule reste supérieure à S1.

En phase de décollage du véhicule avec utilisation du frein de parking, le coupleur est maintenu fermé même en cas d'activation du frein de parking (entre les seuils de vitesse S1 et S2) afin d'assurer le transfert optimal du couple disponible au sol. Ensuite, le coupleur s'ouvre lorsque la vitesse dépasse le seuil S2 et reste ouvert jusqu'à ce que la vitesse diminue sous le seuil S1 (prochain décollage).

Cette stratégie est appliquée aussi bien en mode « 4*4 Automatique » qu'en mode « 4*4 Tout Terrain ».

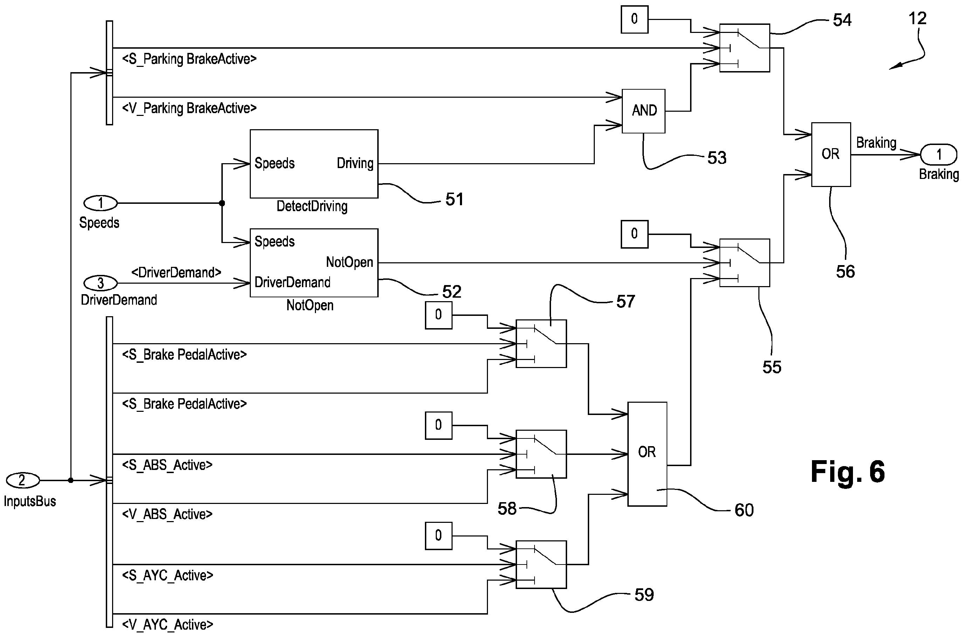

Un mode de réalisation d'une partie du calculateur 12 est décrit ci-après en référence à la figure 6. Cette partie de calculateur permet de mettre en oeuvre les procédés objet de l'invention.

Le calculateur 12 est attaqué par des signaux d'entrée, notamment des signaux d'entrée fournie par le bus 16. À partir de ces signaux d'entrée, il génère un signal logique de sortie identifié *Braking* définissant l'état du coupleur ; le coupleur étant ouvert lorsque le signal *Braking* est à l'état haut et le coupleur étant fermé lorsque ce signal *Braking* est à l'état bas.

Le signal logique *Braking* est issu d'une porte logique OU 56 attaquée par des signaux issus d'une première porte logique 54 et d'une deuxième porte logique 55. Un signal logique issu de la porte 54 est à l'état bas lorsque le dispositif de frein de parking 13a n'est pas activé et à l'état haut lorsque le dispositif de frein de parking 13a est activé et que d'autres conditions sont réunies. Un signal logique issu de la porte 55 est à l'état bas lorsqu'un module 52 délivre un signal logique *NotOpen* à l'état haut et prend l'état d'une porte logique OU 60 lorsque le signal logique *NotOpen* est à l'état bas.

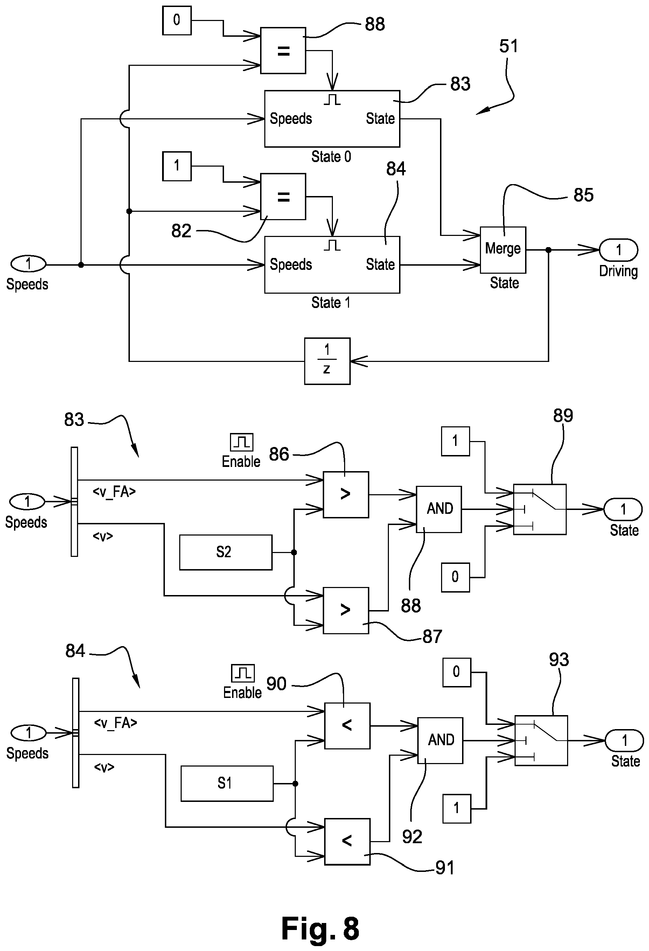

Lorsque le dispositif de frein de parking est activé la porte logique 54 est pilotée de sorte à ce que le signal de sortie de cette porte soit égal au signal logique issu d'une porte logique 53 attaquée par un signal d'activation du dispositif de frein de parking et par la sortie d'un module 51 décrit plus en détails ci-après, en référence à la figure 8.

Un signal logique *Driving* issu du module 51 passe à l'état haut lorsque la vitesse du véhicule (et la vitesse moyenne du premier essieu, par exemple l'essieu avant) est supérieure au seuil de vitesse S2 (par l'action d'un module 83 comprenant des comparateurs 86 et 87, une porte logique ET 88 et une porte logique 89 pilotée par le signal issu de la porte logique ET 88) et passe à l'état bas lorsque la vitesse du véhicule (et la vitesse moyenne du premier essieu, par exemple de l'essieu avant) est supérieure au seuil S1 (par l'action d'un module 84 comprenant des comparateurs 90 et 91, une porte logique ET 92 et une porte logique 93 pilotée par le signal issu de la porte logique ET 92). En d'autres termes, le signal logique *Driving* issu du module 51 et plus précisément du module « merge » 85 prend la valeur de la sortie du module 83 ou de la sortie du module 84 la plus récemment modifiée.

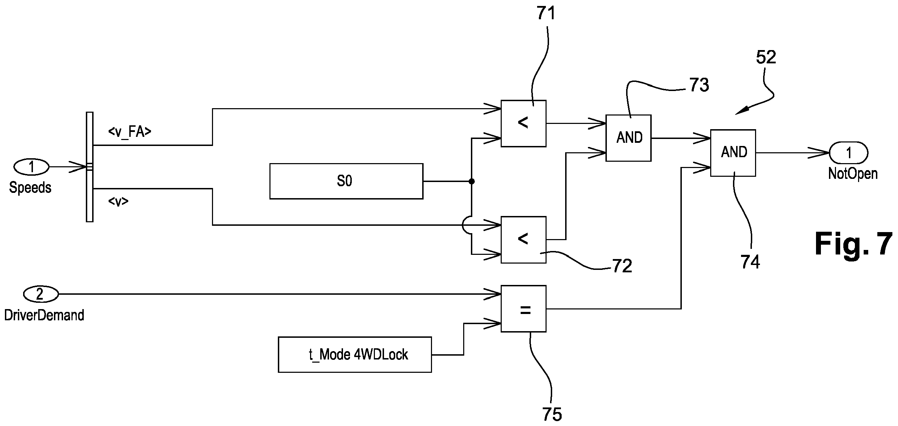

Le signal logique *NotOpen* est par exemple généré comme représenté à la figure 7. Il est issu d'une porte logique ET 74 attaquée par un signal logique issu d'un comparateur 75 dont la sortie est à l'état haut lorsque le système de transmission est en mode « 4*4 Tout Terrain » et par un signal logique issu d'une porte logique ET 73. La porte logique ET 73 est attaquée par un signal logique issu d'un comparateur 71 comparant la vitesse du premier essieu à la vitesse seuil S0 et par un signal logique issu d'un comparateur 72 comparant la vitesse du véhicule à la vitesse seuil S0.

Comme représenté à la figure 6, la porte logique OU 60 est attaquée par trois signaux logiques issus :
- d'une porte logique 57 à l'état haut en cas d'action sur un organe interface utilisateur de commande de freinage comme une pédale de frein, à l'état bas sinon, et
- d'une porte logique 58 à l'état haut en cas d'activation d'un système de freinage ABS, à l'état bas sinon, et
- d'une porte logique 59 à l'état haut en cas d'activation d'un système de correction de la stabilité du véhicule, à l'état bas sinon.

Ainsi, la sortie de la porte logique 60 se trouve à l'état haut dès que le dispositif de freinage 13b est activé, indépendamment que la cause de cette activation soit l'utilisateur ou un système automatique de correction comme un système ABS ou un système de correction de stabilité.

## Revendications

1. Procédé de commande du fonctionnement d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, le système de transmission étant susceptible de fonctionner selon un premier mode (4*4 Tout Terrain) dans lequel le couple transmissible par le moyen de couplage mécanique est fixe ou selon un deuxième mode (4*4 Automatique) dans lequel le couple transmissible par le moyen de couplage mécanique est variable, ledit procédé étant **caractérisé en ce que**, dans les premier et deuxième modes, une action de freinage due à un dispositif (13a) de frein de parking provoque une désactivation du moyen de couplage si la vitesse du véhicule est supérieure à une première vitesse seuil (S2) et tant que la vitesse du véhicule est supérieure à une deuxième vitesse seuil (S1), et **en ce que**, et- dans le premier mode, une action de freinage due à un autre dispositif (13b) de freinage provoque une désactivation du moyen de couplage lorsque la vitesse du véhicule est supérieure à une troisième vitesse seuil (S0).

2. Procédé de commande selon la revendication 1, **caractérisé en ce que**, dans le deuxième mode, une action de freinage due à un autre dispositif (13b) de freinage provoque une désactivation du moyen de couplage indépendamment de la vitesse du véhicule.

3. Support d'enregistrement de données lisible par un calculateur sur lequel est enregistré un programme informatique comprenant des moyens de codes de programme informatique de mise en oeuvre des étapes du procédé selon l'une des revendications précédentes.

4. Système (12) de commande de l'état d'un moyen (11) de couplage mécanique des premier (17) et deuxième (19) essieux d'un système de transmission (18) d'un véhicule automobile (10), le premier essieu étant entraîné par défaut et le deuxième essieu étant entraîné optionnellement selon l'état du moyen de couplage, **caractérisé en ce qu'**il comprend des moyens matériels et/ou logiciels de mise en oeuvre du procédé selon la revendication 1 ou 2.

5. Système de commande selon la revendication précédente, **caractérisé en ce que** les moyens matériels comprennent un moyen de détermination (51, 53, 54) de l'état d'actionnement d'un dispositif (13a) de frein de parking et/ou un moyen (57, 58, 60) de détermination de l'état d'actionnement d'un autre dispositif (13b) de freinage et un moyen de détermination de la vitesse du véhicule automobile et un moyen de détermination du mode de fonctionnement du système de transmission.

6. Système de commande selon la revendication précédente, **caractérisé en ce que** les moyens matériels comprennent des comparateurs (71, 72, 86, 87, 90, 91) pour comparer la vitesse du véhicule automobile à des vitesses seuil.

7. Système de transmission (18) d'un véhicule automobile, comprenant un premier essieu (17) entraîné par défaut et un deuxième essieu (19) entraîné optionnellement selon l'état d'un moyen (11) de couplage mécanique des premier et deuxième essieux et un système (12) de commande du moyen de couplage mécanique selon l'une des revendications 4 à 6.

8. Véhicule automobile (10) comprenant un système (12) de commande selon l'une des revendications 4 à 6 ou un système (18) de transmission selon la revendication précédente.

9. Programme informatique comprenant un moyen de code de programme informatique adapté à la réalisation des étapes du procédé selon la revendication 1 ou 2, lorsque le programme tourne sur un ordinateur.

## Patentansprüche

1. Verfahren zum Steuern der Funktion eines mechanischen Kupplungsmittels (11) der ersten (17) und zweiten (19) Achsen seines Übertragungssystems (18) eines Kraftfahrzeugs (10), wobei die erste Achse standardmäßig angetrieben wird, und die zweite Achse optional nach dem Zustand des Kupplungsmittels angetrieben wird, wobei das Übertragungssystem geeignet ist, nach einem ersten Modus (4*4 Allrad) zu funktionieren, in dem das von dem mechanischen Kupplungsmittel übertragbare Drehmoment feststehend ist, oder nach einem zweiten Modus (4*4 Automatik), in dem das von dem mechanischen Kupplungsmittel übertragbare Drehmoment variabel ist, wobei das Verfahren **dadurch gekennzeichnet ist, dass**
in den ersten und zweiten Modi eine Bremsaktion durch eine Parkbremsvorrichtung (13a) eine Deaktivierung des Kupplungsmittels hervorruft, wenn die Geschwindigkeit des Fahrzeugs höher als eine erste Grenzgeschwindigkeit (S2) ist, und solange die Geschwindigkeit des Fahrzeugs höher als eine zweite Grenzgeschwindigkeit (S1) ist, und dass
in dem ersten Modus eine Bremsaktion durch eine andere Bremsvorrichtung (13b) eine Deaktivierung des Kupplungsmittels hervorruft, wenn die Geschwindigkeit des Fahrzeugs höher als eine dritte Grenzgeschwindigkeit (S0) ist.

2. Steuerverfahren nach Anspruch 1, **dadurch gekennzeichnet, dass** in dem zweiten Modus eine Bremsaktion durch eine andere Bremsvorrichtung (13b) eine Deaktivierung des Kupplungsmittels unabhängig von der Geschwindigkeit des Fahrzeugs hervorruft.

3. Aufzeichnungsträger von Daten, der von einem Rechner lesbar ist, auf dem ein Informatikprogramm aufgezeichnet ist, umfassend Informatikprogrammcodemittel für den Einsatz des Verfahrens nach einem der vorhergehenden Ansprüche.

4. System (12) zum Steuern des Zustands eines mechanischen Kupplungsmittels (11) der ersten (17) und zweiten (19) Achsen eines Übertragungssystems (18) eines Kraftfahrzeugs (10), wobei die erste Achse standardmäßig angetrieben wird, und die zweite Achse optional nach dem Zustand des Kupplungsmittels angetrieben wird, **dadurch gekennzeichnet, dass** es Hardware- und/oder Softwaremittel für den Einsatz des Verfahrens nach Anspruch 1 oder 2 umfasst.

5. Steuersystem nach dem vorhergehenden Anspruch, **dadurch gekennzeichnet, dass** die Hardwaremittel ein Mittel (51, 53, 54) zur Bestimmung des Betätigungszustands einer Parkbremsvorrichtung (13a) und/oder ein Mittel (57, 58, 60) zur Bestimmung des Betätigungszustands einer anderen Bremsvorrichtung (13b) und ein Mittel zur Bestimmung der Geschwindigkeit des Kraftfahrzeugs und ein Mittel zur Bestimmung des Funktionsmodus des Übertragungssystems umfassen.

6. Steuersystem nach dem vorhergehenden Anspruch, **dadurch gekennzeichnet, dass** die Hardwaremittel Komparatoren (71, 72, 86, 87, 90, 91) umfassen, um die Geschwindigkeit des Kraftfahrzeugs mit Grenzgeschwindigkeiten zu vergleichen.

7. Übertragungssystem (18) eines Kraftfahrzeugs, umfassend eine erste Achse (17), die standardmäßig angetrieben wird, und eine zweite Achse (19), die optional nach dem Zustand eines mechanischen Kupplungsmittels (11) der ersten und zweiten Achsen angetrieben wird, und ein System (12) zum Steuern des mechanischen Kupplungsmittels nach einem der Ansprüche 4 bis 6.

8. Kraftfahrzeug (10), umfassend ein Steuersystem (12) nach einem der Ansprüche 4 bis 6 oder ein Übertragungssystem (18) nach dem vorhergehenden Anspruch.

9. Informatikprogramm, umfassend ein Informatikprogrammcodemittel, das an die Durchführung der Schritt des Verfahrens nach Anspruch 1 oder 2 angepasst ist, wenn das Programm auf einem Computer läuft.

## Claims

1. Method for control of the operation of a means (11) for mechanical coupling of the first (17) and second (19) axles of a motor vehicle (10) transmission system (18), the first axle being driven by default and the second axle being driven optionally according to the state of the coupling means, the transmission system being able to operate according to a first mode (4 x 4 Off-road) in which the torque transmissible by the mechanical coupling means is fixed, or according to a second mode (4 x 4 Automatic) in which the torque transmissible by the mechanical coupling means is variable, said method being **characterized in that**, in the first and second modes, a braking action caused by a parking brake device (13a) gives rise to deactivation of the coupling means if the vehicle speed is higher than a first threshold speed (S2), and for as long as the vehicle speed is higher than a second threshold speed (S1), and **in that**, in the first mode, braking action caused by another braking device (13b) gives rise to deactivation of the coupling means when the vehicle speed is higher than a third threshold speed (S0).

2. Control method according to Claim 1, **characterized in that**, in the second mode, braking action caused by another braking device (13b) gives rise to deactivation of the coupling means independently from the vehicle speed.

3. Support for recording of data which can be read by a computer on which there is recorded a computer program comprising computer program code means for implementation of the steps of the method according to one of the preceding claims.

4. System (12) for control of the state of a means (11) for mechanical coupling of the first (17) and second (19) axles of a motor vehicle (10) transmission system (18), the first axle being driven by default and the second axle being driven optionally according to the state of the coupling means, **characterized in that** it comprises hardware and/or software means for implementation of the method according to Claim 1 or 2.

5. Control system according to the preceding claim, **characterized in that** the hardware means comprise a means (51, 53, 54) for determination of the state of activation of a parking brake device (13a) and/or a means (57, 58, 60) for determination of the state of activation of another braking device (13b) and a means for determination of the motor vehicle speed and a means for determination of the operating mode of the transmission system.

6. Control system according to the preceding claim, **characterized in that** the hardware means comprise comparators (71, 72, 86, 87, 90, 91) in order to compare the motor vehicle speed with threshold speeds.

7. Transmission system (18) for a motor vehicle, comprising a first axle (17) which is driven by default, and a second axle (19) which is driven optionally according to the state of a mechanical coupling means (11) of the first and second axles, and a system (12) for controlling the mechanical coupling means according to one of Claims 4 to 6.

8. Motor vehicle (10), comprising a control system (12) according to one of Claims 4 to 6, or a transmission system (18) according to the preceding claim.

9. Computer program comprising a computer program code means which is designed to carry out the steps of the method according to Claim 1 or 2, when the program is running on a computer.
